# EUROPEAN PATENT SPECIFICATION

(11) **EP 3 016 196 B1**
(45) Date of publication and mention of the grant of the patent: **14.06.2017**
(21) Application number: 15175899.2
(22) Date of filing: 08.07.2015
(51) Int. Cl.: H01M 10/052, H01M 10/0567, H01M 10/42, H01M 10/0525, H01M 10/0569

(54) **ELECTROLYTE FOR RECHARGEABLE LITHIUM BATTERY AND RECHARGEABLE LITHIUM BATTERY INCLUDING THE SAME**
ELEKTROLYT FÜR EINE WIEDERAUFLADBARE LITHIUMBATTERIE UND WIEDERAUFLADBARE LITHIUMBATTERIE DENSELBEN UMFASSEND
ÉLECTROLYTE POUR BATTERIE AU LITHIUM RECHARGEABLE ET BATTERIE AU LITHIUM RECHARGEABLE COMPRENANT CE DERNIER

(30) Priority: 28.10.2014 KR 20140147674
(43) Date of publication of application: 04.05.2016
(73) Proprietor: Samsung SDI Co., Ltd., Yongin-si, Gyeonggi-do 17084 (KR)
(72) Inventor: KIM, Moon-Sung, 446-902 Gyeonggi-do (KR); KIM, Duck-Hyun, 446-902 Gyeonggi-do (KR); LEE, Jeong-Hye, 446-902 Gyeonggi-do (KR); HAN, Sang-Il, 446-902 Gyeonggi-do (KR); SHATUNOV, Pavel Alexandrovich, 446-902 Gyeonggi-do (KR); SHIN, Woo-Cheol, 446-902 Gyeonggi-do (KR)
(74) Representative: Russell, Tim

(56) References cited:
- EP-A2- 2 660 920
- CN-A- 103 579 667
- JP-A- H05 307 974
- JP-A- 2009 245 828
- JP-A- 2010 050 021
- US-A1- 2008 248 397
- US-A1- 2014 178 752

## Description

The present invention relates to an electrolyte for a rechargeable lithium battery and a rechargeable lithium battery including the same.

Recent developments in high-tech electronics have allowed electronic devices to become smaller and lighter in weight, which has led to an increase in the number of portable electronic devices. As a power source for such portable electronic devices, the demands for batteries with high energy density are increasing and researches on rechargeable lithium battery are briskly under progress.

The rechargeable lithium battery may be manufactured by injecting an electrolyte into an electrode assembly, which includes a positive electrode including a positive active material capable of intercalating/deintercalating lithium and a negative electrode including a negative active material capable of intercalating/deintercalating lithium. The electrolyte may include an organic solvent in which a lithium salt is dissolved and may critically determine stability and performance of a rechargeable lithium battery. The electrolyte may be ignited and combusted by a radical chain reaction in a gas state. When a self-extinguishing material is added to the electrolyte, the self-extinguishing material reacts with active radicals, for example, H and OH, produced by the combustion reaction and suppresses the radical chain reaction and thus, endows the electrolyte with retardancy (flame retardancy). However, the self-extinguishing material may improve flame retardancy but deteriorate battery performance.

JP 2010 050021 A discloses a non-aqueous electrolyte for secondary battery including a cyclic phosphazene compound represented by general formula (NPR¹₂)ₙ (with R¹ being fluorine, alkoxy or aryloxy and n = 3 or 4), a non-aqueous solvent, a sulfone compound represented by formula R²-SO₂-R³ (with R² and R³ being alkyl, alkenyl or phenyl, said groups optionally being linked to form a ring), and a supporting salt.

US 2014/178752 A1 and CN 103 579 667 A describe the use of a fluorinated cyclotriphosphazene compound in combination with a dinitrile (such as succinonitrile) as additive mixture for the electrolyte of a lithium secondary battery.

EP 2 660 920 A2 and JP 2009 245828 A disclose non-aqueous electrolyte compositions for secondary battery comprising a fluorinated cyclotriphosphazene compound bearing at least one amino or alkoxy group.

US 2008/248397 A1 discloses an electrolyte for rechargeable lithium battery including a non-aqueous organic solvent, a lithium salt, and an additive mixture including vinylene carbonate, fluoroethylene carbonate, and a dinitrile compound.

JP H05 307974 A describes an organic electrolytic solution prepared by dissolving lithium perchlorate in a mixed solvent of sulfolane and ethylene carbonate.

An aspect of one embodiment is directed toward an electrolyte for a rechargeable lithium battery capable of maintaining battery performance as well as securing safety. Another embodiment is directed toward a rechargeable lithium battery including the electrolyte for a rechargeable lithium battery.

According to one embodiment, the invention provides an electrolyte for a rechargeable lithium battery comprising a lithium salt, an organic solvent, and an additive, wherein the additive comprises a sulfur-containing compound represented by Chemical Formula 1, a phosphazene compound represented by Chemical Formula 2, and a nitrile-based compound.

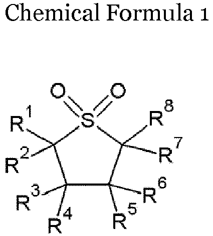

In Chemical Formula 1,
R¹ to R⁸ are independently hydrogen, a substituted or unsubstituted C₁ to C₃₀ alkyl group, a substituted or unsubstituted C2 to C30 alkenyl group, a substituted or unsubstituted C2 to C30 alkynyl group, a substituted or unsubstituted C3 to C30 cycloalkyl group, a substituted or unsubstituted C3 to C30 cycloalkenyl group, a substituted or unsubstituted C3 to C30 cycloalkynyl group, or a substituted or unsubstituted C6 to C30 aryl group.

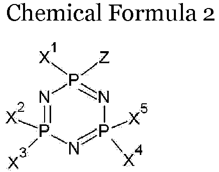

In Chemical Formula 2,
X¹ to X⁵ are independently a halogen atom or a halogen-containing group, and
Z is -NR⁹R¹⁰ or -OR¹¹, wherein R⁹ and R¹⁰ are independently a substituted or unsubstituted C1 to C30 alkyl group, a substituted or unsubstituted C2 to C30 alkenyl group, a substituted or unsubstituted C2 to C30 alkynyl group, a substituted or unsubstituted C3 to C30 cycloalkyl group, a substituted or unsubstituted C3 to C30 cycloalkenyl group, a substituted or unsubstituted C1 to C30 haloalkyl group, a substituted or unsubstituted C6 to C30 aryl group, a substituted or unsubstituted C6 to C30 halogenated aryl group, a substituted or unsubstituted C7 to C20 arylalkyl group, a substituted or unsubstituted C1 to C20 heteroalkyl group, a substituted or unsubstituted C2 to C30 heterocycloalkyl group, a substituted or unsubstituted C2 to C30 heteroaryl group, or a substituted or unsubstituted C1 to C20 aldehyde group, and
R¹¹ is a substituted or unsubstituted C1 to C30 alkyl group.

The sulfur-containing compound may be included in the electrolyte in an amount of about 1 part by weight to about 20 parts by weight relative to 100 parts by weight of the organic solvent.

The phosphazene compound may comprise at least one of the compounds represented by Chemical Formulae 3 to 5.

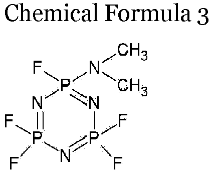

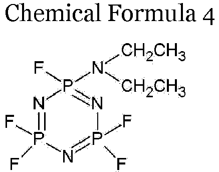

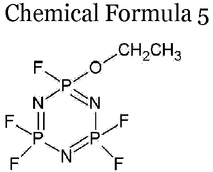

The phosphazene compound may be included in the electrolyte in an amount of about 1 part by weight to about 20 parts by weight based on 100 parts by weight of the organic solvent.

The nitrile-based compound may comprise a compound represented by Chemical Formula 6.

Chemical Formula 6 N≡C-L-C≡N

In Chemical Formula 6,
L is a substituted or unsubstituted C1 to C20 alkylene group, and the substituted C1 to C20 alkylene group includes an alkylene wherein at least one hydrogen is substituted with a cyano group (-CN), an isocyano group (-NC), or a thiocyano group (-SCN).

The nitrile-based compound may comprise a compound represented by Chemical Formula 7, a compound represented by Chemical Formula 8, or a mixture thereof.

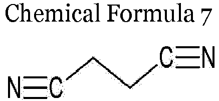

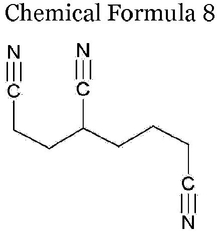

The nitrile-based compound may comprise the compound represented by Chemical Formula 7 and the compound represented by Chemical Formula 8.

The nitrile-based compound may be included in the electrolyte in an amount of about 0.1 parts by weight to about 10 parts by weight based on 100 parts by weight of the organic solvent.

The additive may further comprise a sultone-based compound, and the sultone-based compound may comprise a compound represented by Chemical Formula 9, a compound represented by Chemical Formula 10, or a mixture thereof.

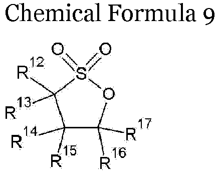

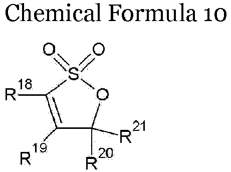

In Chemical Formulae 9 and 10,
R¹² to R²¹ are independently hydrogen, a substituted or unsubstituted C1 to C30 alkyl group, a substituted or unsubstituted C2 to C30 alkenyl group, a substituted or unsubstituted C2 to C30 alkynyl group, a substituted or unsubstituted C3 to C30 cycloalkyl group, a substituted or unsubstituted C3 to C30 cycloalkenyl group, a substituted or unsubstituted C3 to C30 cycloalkynyl group, or a substituted or unsubstituted C6 to C30 aryl group.

The sultone-based compound may comprise the compound represented by Chemical Formula 9 and the compound represented by Chemical Formula 10.

The sultone-based compound may be included in the electrolyte in an amount of about 0.1 parts by weight to about 10 parts by weight based on 100 parts by weight of the organic solvent.

The organic solvent may comprise a carbonate-based compound and an ester-based compound, and the ester-based compound may comprise ethyl propionate.

According to another embodiment, the invention provides a rechargeable lithium battery comprising an electrolyte as described above.

Other embodiments are included and described in the following detailed description. According to aspects of embodiments of the present disclosure, a rechargeable lithium battery maintaining battery performance as well as securing safety may be realized.

The accompanying drawings, together with the specification, illustrate embodiments of the present invention, and, together with the description, serve to explain the principles of the present invention.
FIG. 1 is a perspective view of a portion of a rechargeable lithium battery according to one embodiment.
FIG. 2A is a graph showing capacity of rechargeable lithium battery cells of Comparative Examples 1, 2, 4, 6 and 7 depending on a number of cycles.
FIG. 2B is a graph showing capacity of rechargeable lithium battery cells of Examples 1 to 4 and 6 depending on a number of cycles.
FIG. 3 is a graph showing thickness increase rates of the rechargeable lithium battery cells of Examples 1, 2 and 6 and Comparative Examples 1, 2, 4 and 6 when allowed to stand at a high temperature.
FIG. 4 is a graph showing internal resistance increase rates of the rechargeable lithium battery cells of Examples 1, 2 and 6 and Comparative Examples 1, 2, 4 and 6 when allowed to stand at a high temperature.
FIGS. 5 and 6 show temperature changes of the rechargeable lithium battery cells of Example 1 and Comparative Examples 2 and 4 depending on time and their respective temperature change rates depending on a temperature as their respective accelerating rate calorimeter (ARC) evaluation results.

As used herein, when a definition is not otherwise provided, the term "substituted" refers to one substituted with a substituent selected from a halogen (e.g., F, Br, Cl or I), a hydroxy group, an alkoxy group, a nitro group, a cyano group, an amino group, an azido group, an amidino group, a hydrazino group, a hydrazono group, a carbonyl group, a carbamyl group, a thiol group, an ester group, a carboxyl group or a salt thereof, a sulfonic acid group or a salt thereof, a phosphoric acid group or a salt thereof, a C1 to C20 alkyl group, a C2 to C20 alkenyl group, a C2 to C20 alkynyl group, a C6 to C30 aryl group, a C7 to C30 arylalkyl group, a C1 to C4 alkoxy group, a C1 to C20 heteroalkyl group, a C3 to C20 heteroarylalkyl group, a C3 to C30 cycloalkyl group, a C3 to C15 cycloalkenyl group, a C6 to C15 cycloalkynyl group, a C2 to C20 heterocycloalkyl group, and a combination thereof, instead of hydrogen of a compound or a group.

As used herein, when a definition is not otherwise provided, the term "hetero" refers to one including 1 to 3 hetero atoms selected from N, O, S, and P.

Hereinafter, an electrolyte for a rechargeable lithium battery according to one embodiment is described.

An electrolyte for a rechargeable lithium battery according to one embodiment comprises a lithium salt, an organic solvent and an additive.

The additive comprises a sulfur-containing compound, a phosphazene compound and a nitrile-based compound.

The sulfur-containing compound comprises a compound represented by Chemical Formula 1.

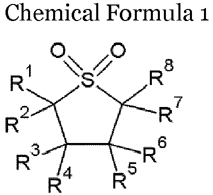

In Chemical Formula 1,
R¹ to R⁸ are independently hydrogen, a substituted or unsubstituted C1 to C30 alkyl group, a substituted or unsubstituted C2 to C30 alkenyl group, a substituted or unsubstituted C2 to C30 alkynyl group, a substituted or unsubstituted C3 to C30 cycloalkyl group, a substituted or unsubstituted C3 to C30 cycloalkenyl group, a substituted or unsubstituted C3 to C30 cycloalkynyl group, or a substituted or unsubstituted C6 to C30 aryl group.

The sulfur-containing compound represented by Chemical Formula 1 has excellent oxidation stability and resistance against oxidation in a high voltage battery and also, retardant characteristics (e.g., fire or flame retardant characteristics) such that a fire is not well caught (e.g., a likelihood of a fire in the electrolyte or the battery is reduced).

In some embodiments, the sulfur-containing compound is reduced and decomposed on a negative electrode and may form a solid electrolyte interphase (SEI) film thereon. The SEI film may impart high temperature cycle-life characteristics to the battery as well as postpone or reduce a self-heating rate when the battery is exposed to heat (e.g., thermal runaway).

In the sulfur-containing compound of Chemical Formula 1, R¹ to R⁸ may be independently hydrogen, or a substituted or unsubstituted C1 to C30 alkyl group. For example, the sulfur-containing compound may be sulfolane wherein, in Chemical Formula 1, R¹ to R⁸ are all hydrogen.

The sulfur-containing compound may be included in the electrolyte in an amount of about 1 part by weight to about 20 parts by weight, for example, about 1 part by weight to about 15 parts by weight, about 1 part by weight to about 10 parts by weight, or about 1 part by weight to about 5 parts by weight relative to 100 parts by weight of the organic solvent. When the sulfur-containing compound is included in the electrolyte within any of the foregoing ranges, a flash point (e.g., a flash point of the electrolyte) is increased, and thus, flame retardancy is not only improved but ion conductivity is also increased, thereby securing excellent performance of a rechargeable lithium battery.

The phosphazene compound comprises a compound represented by Chemical Formula 2.

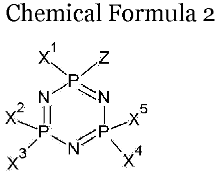

In Chemical Formula 2,
X¹ to X⁵ are independently a halogen atom or a halogen-containing group, and
Z is -NR⁹R¹⁰ or -OR¹¹, wherein R⁹ and R¹⁰ are independently a substituted or unsubstituted C1 to C30 alkyl group, a substituted or unsubstituted C2 to C30 alkenyl group, a substituted or unsubstituted C2 to C30 alkynyl group, a substituted or unsubstituted C3 to C30 cycloalkyl group, a substituted or unsubstituted C3 to C30 cycloalkenyl group, a substituted or unsubstituted C1 to C30 haloalkyl group, a substituted or unsubstituted C6 to C30 aryl group, a substituted or unsubstituted C6 to C30 halogenated aryl group, a substituted or unsubstituted C7 to C20 arylalkyl group, a substituted or unsubstituted C1 to C20 heteroalkyl group, a substituted or unsubstituted C2 to C30 heterocycloalkyl group, a substituted or unsubstituted C2 to C30 heteroaryl group, or a substituted or unsubstituted C1 to C20 aldehyde group, and R¹¹ is a substituted or unsubstituted C1 to C30 alkyl group.

An electrolyte or an oxide-based positive active material may decompose and generate oxygen during explosion, and herein, the phosphazene compound represented by the above Chemical Formula 2 captures the oxygen and prevents (or reduces) combustion of a battery. In some embodiments, the phosphazene compound may work or function as an additive to decompose and form a film and thus, the phosphazene compound may form a film having low resistance (low electrical resistance). Accordingly, excellent performance of a rechargeable lithium battery may be secured.

In this way, when both the sulfur-containing compound and the phosphazene compound are added to or included in an electrolyte, excellent stability of a rechargeable lithium battery may not only be secured but its performance may also be maintained or improved.

For example, in the phosphazene compound of Chemical Formula 2, at least one of X¹ to X⁵ may be a halogen atom. In some embodiments, each of X¹ to X⁵ is a halogen atom. For example, each of X¹ to X⁵ may be fluorine.

In Chemical Formula 2, when Z is -NR⁹R¹⁰, R⁹ and R¹⁰ may be independently a substituted or unsubstituted C1 to C30 alkyl group, or a substituted or unsubstituted C₁ to C³⁰ cycloalkyl group.

In Chemical Formula 2, Z may be -OR¹¹. When the Z is an alkoxy group such as -OR¹¹, excellent self-extinguishing property may be obtained due to a high flash point and excellent flame retardancy. Herein, R¹¹ may be a substituted or unsubstituted C1 to C30 alkyl group, for example, a substituted or unsubstituted C1 to C5 alkyl group.

The phosphazene compound represented by Chemical Formula 2 may be, for example, at least one of the compounds represented by the following Chemical Formulae 3 to 5.

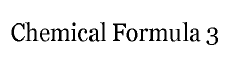

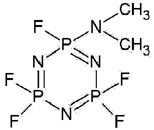

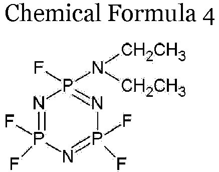

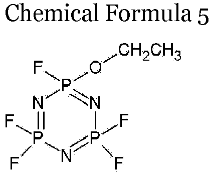

In some embodiments, the phosphazene compound may not deteriorate performance of a battery but improves flame retardancy of the electrolyte.

The phosphazene compound may be included in the electrolyte in an amount of about 1 part by weight to about 20 parts by weight, for example, about 3 parts by weight to about 20 parts by weight, about 3 parts by weight to about 15 parts by weight, or about 3 parts by weight to about 10 parts by weight based on 100 parts by weight of the organic solvent. When the phosphazene compound is included in the electrolyte within any of the foregoing ranges, a flash point is increased, and thus, excellent flame retardancy is obtained, and stability may also be improved without deteriorating battery performance such as rate capability, cycle-life characteristics and the like.

The nitrile-based compound may be a compound including at least one cyano group. When the nitrile-based compound is added or included along with the sulfur-containing compound and the phosphazene compound in the electrolyte, stability is provided and also improved characteristics are observed when the rechargeable lithium battery is allowed to stand at a high temperature.

For example, the nitrile-based compound may comprise a compound represented by the following Chemical Formula 6. When the nitrile-based compound including at least two cyano groups at the end of a carbon chain as shown in the following Chemical Formula 6 is added, bonding energy with ions is much increased when the cyano groups are open in both ways (e.g., the nitrile-based compound includes at least two terminal cyano groups bonded to a main chain through a respective carbon atom), and thus, cycle-life and characteristics when the rechargeable lithium battery is allowed to stand at a high temperature may be improved.

Chemical Formula 6 N≡C-L-C≡N

In Chemical Formula 6,
L is a substituted or unsubstituted C1 to C20 alkylene group, and the substituted C1 to C20 alkylene group is an alkylene wherein at least one hydrogen is substituted with a cyano group (-CN), an isocyano group (-NC), or a thiocyano group (-SCN).

For example, the nitrile-based compound may comprise a compound represented by the following Chemical Formula 7, a compound represented by the following Chemical Formula 8, or a combination or mixture thereof.

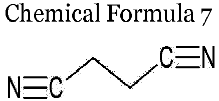

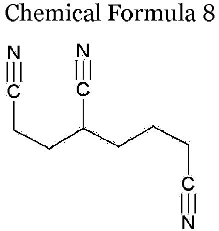

For example, the nitrile-based compound may include a mixture of the compound represented by Chemical Formula 7 and the compound represented by Chemical Formula 8. These compounds may be mixed to a weight ratio of about 1:5 to about 5:1, for example, a weight ratio of about 5: to about 1:1, or a weight ratio of about 3:1 to about 1:1. When the compounds are included in the electrolyte within any of the foregoing weight ratio ranges, stability and characteristics when the rechargeable lithium battery is allowed to stand at a high temperature may be further improved. The nitrile-based compound may be included in the electrolyte in an amount of about 0.1 parts by weight to about 10 parts by weight, for example, about 0.2 parts by weight to about 10 parts by weight, or about 0.2 parts by weight to about 5 parts by weight based on 100 parts by weight of the organic solvent. When the nitrile-based compound is included in the electrolyte within any of the foregoing ranges, characteristics when the rechargeable lithium battery is allowed to stand at a high temperature, such as of a decrease in cell thickness increase or cell resistance increase according to gas generation of a rechargeable lithium battery and the like, may be improved.

The additive may further comprise a sultone-based compound other than (or in addition to) the above-described sulfur-containing compound, phosphazene compound and nitrile-based compound.

When the sultone-based compound along with the above-described additives is added to or included in an electrolyte, improved stability is provided and improved characteristics are observed when the rechargeable lithium battery is allowed to stand at a high temperature.

For example, the sultone-based compound may comprise a compound represented by the following Chemical Formula 9, a compound represented by the following Chemical Formula 10, or a combination or mixture thereof.

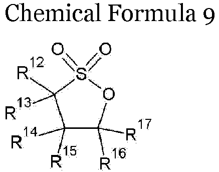

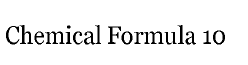

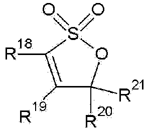

In Chemical Formulae 9 and 10,
R¹² to R²¹ are independently hydrogen, a substituted or unsubstituted C1 to C30 alkyl group, a substituted or unsubstituted C2 to C30 alkenyl group, a substituted or unsubstituted C2 to C30 alkynyl group, a substituted or unsubstituted C3 to C30 cycloalkyl group, a substituted or unsubstituted C3 to C30 cycloalkenyl group, a substituted or unsubstituted C3 to C30 cycloalkynyl group, or a substituted or unsubstituted C6 to C30 aryl group.

In some embodiments, the sultone-based compound is represented by the above Chemical Formula 9, in which R¹² to R¹⁷ may be independently hydrogen, or a substituted or unsubstituted C1 to C30 alkyl group. For example, the sultone-based compound may be propane sultone in which R¹² to R¹⁷ in Chemical Formula 9 are all hydrogen.

In some embodiments, the sultone-based compound is represented by the above Chemical Formula 10 in which R¹⁸ to R²¹ are independently hydrogen, or a substituted or unsubstituted C1 to C30 alkyl group. For example, the sultone-based compound is propene sultone in which R¹⁸ to R²¹ in Chemical Formula 10 are all hydrogen.

The sultone-based compound may include a mixture of the compound represented by Chemical Formula 9 and the compound represented by Chemical Formula 10. These compounds may be mixed to a weight ratio of about 1:5 to about 5:1, for example, a weight ratio of about 5: to about 1:1, or a weight ratio of about 3:1 to about 1:1. When the compounds are mixed or included in the electrolyte within any of the foregoing weight ratio ranges, both stability and characteristics when the rechargeable lithium battery is allowed to stand at a high temperature may be further improved.

The sultone-based compound may be included in the electrolyte in an amount of about 0.1 parts by weight to about 10 parts by weight, for example, about 0.2 parts by weight to about 10 parts by weight, or about 0.2 parts by weight to about 5 parts by weight based on 100 parts by weight of the organic solvent. When the compound is included in the electrolyte within any of the foregoing ranges, characteristics, such as the decreases in cell thickness increase and cell resistance increase due to the gas generation of the rechargeable lithium battery, characteristics of a cell recovery capacity increase, and the like, when the rechargeable lithium battery is allowed to stand at a high temperature may be extremely improved.

The additive may comprise fluoroethylene carbonate, vinylethylene carbonate, LiBF₄ or a combination or mixture thereof besides or in addition to the sulfur-containing compound, the phosphazene compound, the nitrile-based compound and the sultone-based compound.

The fluoroethylene carbonate may be included in the electrolyte in an amount of about 3 parts by weight to about 50 parts by weight, or, for example, about 5 parts by weight to about 20 parts by weight based on 100 parts by weight of the organic solvent. The vinylethylene carbonate may be included in the electrolyte in an amount of about 0.1 parts by weight to about 2 parts by weight, or, for example, about 0.3 parts by weight to about 1 part by weight based on 100 parts by weight of the organic solvent. When the fluoroethylene carbonate and the vinylethylene carbonate are respectively included in the electrolyte within any of the foregoing, respective ranges, a suitable or optimal passivation film on a negative electrode capable of improving cycle-life characteristics of the battery may be formed. The LiBF₄ may in included in the electrolyte in an amount of 0.1 parts by weight to 3 parts by weight based on 100 parts by weight of the organic solvent.

The organic solvent as an electrolyte component may comprise a carbonate-based compound, an ester-based compound, an ether-based compound, a ketone-based compound, an alcohol-based compound, or a combination or mixture thereof. Among them, for example, the carbonate-based compound and the ester-based compound may be mixed in order to adjust viscosity of a solvent suitably (e.g., to suitably adjust a viscosity of the organic solvent or electrolyte).

The carbonate-based compound may comprise dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), butylene carbonate (BC), or a combination or mixture thereof.

The ester-based compound may comprise methylacetate, ethylacetate, n-propylacetate, methylpropionate, ethylpropionate, γ-butyrolactone, decanolide, valerolactone, mevalonolactone, caprolactone, and the like. Among these, the ethylpropionate as a solvent having low viscosity may be mixed with the carbonate-based compound to adjust viscosity (e.g., to suitably adjust a viscosity of the organic solvent or electrolyte).

The carbonate-based compound and the ester-based compound may be included in the electrolyte at a volume ratio of about 10:0 to about 5:5, for example, a volume ratio of about 10:0 to about 7:3. These above additives may be used when the carbonate-based compound is mixed with the ester-based compound as well as used alone, and in addition, when included in the electrolyte within any of the foregoing volume ratio ranges, viscosity of a solvent is appropriately adjusted, thereby securing excellent battery performance depending on purpose of a cell.

The ether-based compound may comprise dibutylether, tetraglyme, diglyme, dimethoxyethane, 2-methyltetrahydrofuran, tetrahydrofuran, and/or the like. The ketone-based compound may include cyclohexanone, and/or the like. The alcohol-based compound may include ethanol, isopropyl alcohol, and/or the like.

The lithium salt as an electrolyte component is dissolved in the organic solvent and works as a lithium ion source in the battery and thus, may play a role of basically making the rechargeable lithium battery operate and of promoting movement of lithium ions between positive and negative electrodes.

The lithium salt may include LiPF₆, LiSbF₆, LiAsF₆, LiN (SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂) (wherein, x and y are natural numbers, e.g. an integer of 1 to 20), LiCl, LiI, LiB(C₂O₄)₂ (lithium bisoxalatoborate (LiBOB)), lithium bis(fluorosulfonyl)imide (LiFSI), or a combination or mixture thereof.

The concentration of the lithium salt may be about 0.1 M to about 2.0 M. When the concentration of the lithium salt in the electrolyte is within the foregoing range, the electrolyte has appropriate conductivity and viscosity and thus, may effectively move lithium ions and show excellent electrolyte performance.

The viscosity of the electrolyte having the composition may be less than or equal to about 8 cP, for example, less than or equal to about 5 cP, or about 4 to about 5 cP. When the electrolyte has a viscosity within any of the foregoing ranges, excellent battery performance and specifically, excellent rate capability may be obtained.
The ion conductivity of the electrolyte may be greater than or equal to about 5 mS/cm, for example, about 5 mS/cm to about 12 mS/cm, or about 6 mS/cm to about 9 mS/cm. When the electrolyte has an ion conductivity within any of the foregoing ranges, excellent cycle-life characteristics may be obtained.

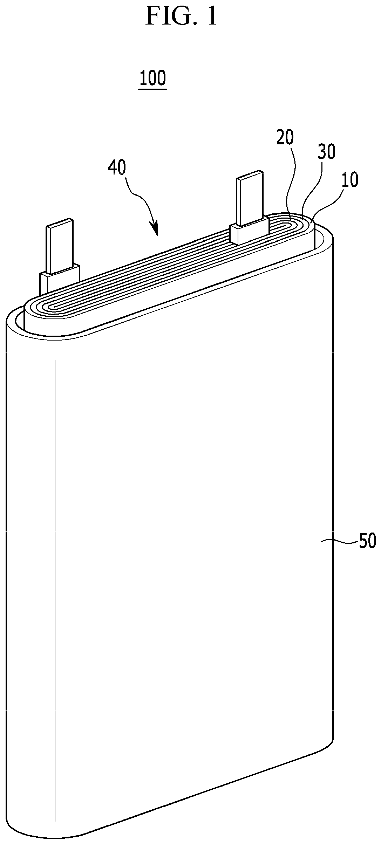

Hereinafter, a rechargeable lithium battery including the electrolyte is described referring to FIG. 1.

FIG. 1 is a perspective view of a portion of a rechargeable lithium battery according to one embodiment. The rechargeable lithium battery according to one embodiment may be, for example, prismatic, but the rechargeable lithium battery is not limited thereto and may have various suitable shapes such as a cylinder, a pouch and the like but is not particularly limited thereto.

Referring to FIG. 1, a rechargeable lithium battery 100 according to one embodiment includes an electrode assembly 40 in which a separator 30 is interposed between a positive electrode 10 and a negative electrode 20, and a case 50 housing the electrode assembly 40. The positive electrode 10, the negative electrode 20 and the separator 30 are impregnated in an electrolyte solution (e.g., with the electrolyte).

The electrolyte is the same or substantially the same as described above.

The positive electrode includes a current collector and a positive active material layer formed on the current collector. The positive active material layer includes a positive active material, and may, optionally, include a binder and a conductive material.
The current collector may include Al (aluminum), but is not limited thereto.

The positive active material may include lithiated intercalation compounds that reversibly intercalate and deintercalate lithium ions. For example, at least one composite oxide of lithium and a metal of cobalt, manganese, nickel, or a combination thereof may be used, and examples of the positive active material may include a compound represented by one of the following chemical formulae:
LiₐA_{1-b}B_{b}D₂ (0.90 ≤ a ≤ 1.8 and o ≤ b ≤ 0.5); LiₐE_{1-b}B_{b}O_{2-c}D_{c} (0.90 ≤ a ≤ 1.8, 0 ≤ b ≤ 0.5, 0 ≤ c ≤ 0.05); LiₐE_{2-b}B_{b}O_{4-c}D_{c} (0.90 ≤ a ≤ 1.8, 0 ≤ b ≤ 0.5, 0 ≤ c ≤ 0.05); LiₐNi_{1-b-c}Co_{b}B_{c}D_{α} (0.90 ≤ a ≤ 1.8, 0 ≤ b ≤ 0.5, o ≤ c ≤ 0.05, o < α ≤ 2); LiₐNi_{1-b-c}Co_{b}B_{c}O_{2-α}F_{α} (0.90 ≤ a ≤ 1.8, 0 ≤ b ≤ 0.5, o ≤ c ≤ 0.05, o < α < 2); LiₐNi_{1-b-c}Co_{b}B_{c}O_{2-α}F₂ (0.90 ≤ a ≤ 1.8, 0 ≤ b ≤ 0.5, o ≤ c ≤ 0.05, o < α < 2); LiₐNi_{1-b-c}Mn_{b}B_{c}D_{α} (0.90 ≤ a ≤ 1.8, 0 ≤ b ≤ 0.5, o ≤ c ≤ 0.05, o < α ≤ 2); LiₐNi_{1-b-c}Mn_{b}BₑO₂₋αF_{α} (0.90 ≤ a ≤ 1.8, o ≤ b ≤ 0.5, o ≤ c ≤ 0.05, o < α < 2); LiₐNi_{1-b-c}Mn_{b}B_{c}O_{2-α}F₂ (0.90 ≤ a ≤ 1.8, 0 ≤ b ≤ 0.5, o ≤ c ≤ 0.05, o < α < 2);
LiₐNi_{b}E_{c}G_{d}O₂ (0.90 ≤ a ≤ 1.8, 0 ≤ b ≤ 0.9, o ≤ c ≤ 0.5, 0.001 ≤ d ≤ 0.1);
LiₐNi_{b}Co_{c}Mn_{d}GₑO₂ (0.90 ≤ a ≤ 1.8, 0 ≤ b ≤ 0.9, o ≤ c ≤ 0.5, o ≤ d ≤0.5, 0.001 ≤ e ≤ 0.1);
LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1);
LiₐMnG_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); QO₂; QS₂; LiQS₂; V₂O₅; LiV₂O₅; LiIO₂; LiNiVO₄; Li(_{3-f)}J₂(PO₄)₃ (o ≤ f ≤ 2); Li(_{3-f)}Fe₂(PO₄)₃ (o ≤ f ≤ 2); and LiFePO₄.

In the above chemical formulae, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof.

The positive active material may include, for example, lithium cobalt oxide, lithium nickel cobalt manganese oxide, lithium nickel cobalt aluminum oxide, or a combination or mixture thereof.

The binder improves binding properties of positive active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material improves conductivity of an electrode. Any suitable, electrically conductive material may be used as a conductive material, unless it causes a chemical change in the rechargeable lithium battery or a component thereof. Examples thereof may be one or more mixtures of natural graphite, artificial graphite, carbon black, acetylene black, ketjen black, a carbon fiber, a metal powder, a metal fiber and the like of copper, nickel, aluminum, silver, and the like, a conductive material of a polyphenylene derivative, and the like.

The positive active material may be included in an amount of about 90 wt% to 98 wt%, the binder may be included in an amount of about 1 wt% to about 5 wt% and the conductive material may be included in an amount of about 1 wt% to about 5 wt% based on the total weight of the positive active material layer.

The negative electrode includes a current collector and a negative active material layer formed on the current collector.

The current collector may include a copper foil, and the like, but is not limited thereto.

The negative active material layer may include a negative active material, and may, optionally, include a binder and a conductive material.

The negative active material may include a material that reversibly intercalates/deintercalates lithium ions, a lithium metal, a lithium metal alloy, a material being capable of doping and dedoping lithium, or a transition metal oxide.

The material that reversibly intercalates/deintercalates lithium ions may include a carbon material, which may include any suitable carbon-based negative active material available in the art of a rechargeable lithium battery.

The material being capable of doping and dedoping lithium may include Si, SiOₓ (o<x<2), a Si-C composite, a Si-Y alloy (wherein Y is selected from an alkali metal, an alkaline-earth metal, Group 13 to 16 elements, a transition metal, a rare earth element and a combination thereof, and not Si), Sn, SnO₂, a Sn-C composite, Sn-Y alloy (wherein Y is selected from an alkali metal, an alkaline-earth metal, Group 13 to 16 elements, a transition metal, a rare earth element and a combination thereof, and not Sn), and/or the like. At least one of them may be mixed with SiO₂. The element Y may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po and a combination thereof.

The binder improves binding properties of the negative active material particles to each other and to a current collector. The binder includes a non-water-soluble binder, a water-soluble binder, or a combination thereof.

In some embodiments, the non-water-soluble binder includes polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, polyamideimide, polyimide, or a combination thereof.

In some embodiments, the water-soluble binder includes a styrene-butadiene rubber, an acrylated styrene-butadiene rubber, polyvinyl alcohol, sodium polyacrylate, a polymer of propylene and a C2 to C8 olefin, a copolymer of (meth)acrylic acid and (meth)acrylic acid alkyl ester, or a combination thereof.

When the water-soluble binder is used as a negative electrode binder, a cellulose-based compound may be further used to provide viscosity. In some embodiments, the cellulose-based compound includes one or more of carboxylmethyl cellulose, hydroxypropylmethyl cellulose, methyl cellulose, or alkali metal salts thereof. In some embodiments, the alkali metal may be Na, K, or Li. Such a cellulose-based compound may be included in an amount of about 0.1 parts by weight to about 3 parts by weight based on 100 parts by weight of the negative active material.

The conductive material improves electrical conductivity of a negative electrode. Any suitable, electrically conductive material can be used as a conductive material unless it causes a chemical change in the rechargeable lithium battery or a component thereof. The conductive material improves conductivity of an electrode. Examples thereof may be a carbon-based material such as natural graphite, artificial graphite, carbon black, acetylene black, ketjen black, a carbon fiber, and the like; a metal-based material of metal powder or metal fiber including copper, nickel, aluminum, silver, and the like; a conductive polymer such as a polyphenylene derivative and the like; or a mixture thereof.

The negative active material may be included in an amount of about 90 wt% to 98 wt%, the binder may be included in an amount of about 1 wt% to about 5 wt% and the conductive material may be included in an amount of about 1 wt% to about 5 wt% based on the total weight of the negative active material layer.

The negative electrode and positive electrode may be manufactured in a method of preparing an active material composition by mixing each active material, a conductive material, and a binder and coating the active material composition on a current collector. The active material composition may also include a solvent. The solvent includes N-methylpyrrolidone and/or the like, and the binder may be an aqueous binder but they are not limited thereto. The electrode manufacturing method should be readily apparent to those of ordinary skill in the art, and thus, further description thereof is not necessary in the present specification.

The separator may include any suitable materials available in the art of lithium batteries as long as they are capable of separating a negative electrode from a positive electrode and providing a transporting passage for lithium ions. In other words, the separator may be made of a material having a low resistance to ion transportation and an improved impregnation for an electrolyte. For example, the material may be selected from glass fiber, polyester, TEFLON (tetrafluoroethylene), polyethylene, polypropylene, polytetrafluoroethylene (PTFE), or a combination thereof. It may have a form of a non-woven fabric or a woven fabric.

A rechargeable lithium battery including the above-described electrolyte may exhibit improved performance characteristics when allowed to stand at a high temperature and the like as well as having excellent stability.

Hereinafter, certain embodiments are illustrated in more detail with reference to examples. These examples, however, should not in any sense be interpreted as limiting the scope of the present invention.

Furthermore, what is not described in this disclosure may be sufficiently understood by those who have knowledge or ordinary skill in this field and does not need to be illustrated here.

Examples 1 to 6 and Comparative Examples 1 to 7
LiCoO₂, polyvinylidene fluoride and carbon black at a weight ratio of 96:2:2, respectively, were added to an N-methylpyrrolidone (NMP) solvent, thereby preparing a slurry. The slurry was coated on an aluminum (Al) thin film and dried, thereby manufacturing a positive electrode.

On the other hand, graphite, carboxylmethyl cellulose and a styrene-butadiene rubber at a weight ratio of 98:1:1, respectively, were added to distilled water, thereby preparing a slurry. The slurry was coated and dried on a copper foil and compressed, thereby manufacturing a negative electrode.

An electrolyte was prepared by adding a lithium salt and an additive to an organic solvent to have a composition as set forth in the following Table 1.

The positive and negative electrodes and the electrolyte were used with a polyethylene separator, thereby manufacturing a rechargeable lithium battery cell.

**Table 1**

| | | Examples | | | | | | Comparative Examples | | | | | | |
|---|---|---|---|---|---|---|---|---|---|---|---|---|---|---|
| | | 1 | 2 | 3 | 4 | 5 | 6 | 1 | 2 | 3 | 4 | 5 | 6 | 7 |
| Lithium salt | LiPF₆ (M) | 0.9 | 0.9 | 0.9 | 0.9 | 0.9 | 0.9 | 0.9 | 0.9 | 0.9 | 0.9 | 0.9 | 0.9 | 0.9 |
| Organic solvent | EC (volume%) | 30 | 30 | 30 | 30 | 30 | 30 | 30 | 30 | 30 | 30 | 30 | 30 | 30 |
| | EP (volume%) | 20 | 20 | - | 20 | - | 20 | 20 | 20 | 20 | 20 | 20 | 20 | - |
| | DEC (volume%) | 50 | 50 | 20 | 50 | 20 | 50 | 50 | 50 | 50 | 50 | 50 | 50 | 20 |
| | EMC (volume%) | - | - | 50 | - | 50 | - | - | - | - | - | - | - | 50 |
| Additive | Sulfolane (parts by weight) | 2 | 2 | 2 | 2 | 2 | 2 | - | - | - | 2 | 2 | - | - |
| | Phosphazene compound (parts by weight) | 7 | 7 | 7 | 7 | 7 | 7 | - | - | 7 | 7 | - | - | - |
| | First nitrile-based compound (parts by weight) | 3 | 3 | 3 | - | - 3 | 1 | - | 3 | 3 | - | 3 | 3 | - |
| | Second nitrile-based compound (parts by weight) | - | - | - | 3 | - | 3 | - | - | - | - | - | - | - |
| | First sultone-based compound (parts by weight) | 2 | - | 2 | 2 | - | 1 | - | 2 | 2 | - | 2 | - | - |
| | Second sultone-based compound (parts by weight) | - | - | - | - | - | 2.5 | - | - | - | - | - | - | - |

In Table 1, EC denotes ethylene carbonate, EP denotes ethylpropionate, DEC denotes diethyl carbonate, and EMC denotes ethylmethyl carbonate.

Additionally, in Table 1, the phosphazene compound is a compound represented by the following Chemical Formula 5.

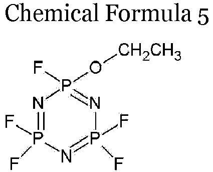

The first nitrile-based compound in Table 1 is a compound represented by the following Chemical Formula 8.

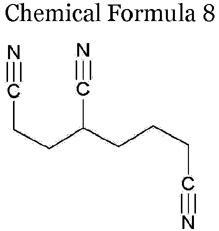

The second nitrile-based compound in Table 1 is a compound represented by the following Chemical Formula 7.

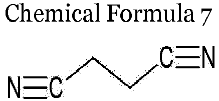

The first sultone-based compound in Table 1 is a compound represented by the following Chemical Formula 11.

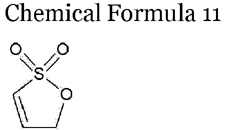

The second sultone-based compound in Table 1 is a compound represented by the following Chemical Formula 12.

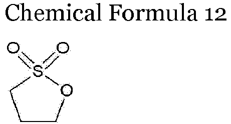

In Table 1, the parts by weight are units based on 100 parts by weight of the organic solvent

### Evaluation 1: Flame Retardancy of Electrolyte

Viscosity, ion conductivity, flash point and self heat generation time of the electrolyte according to Examples 1 to 6 and Comparative Examples 1 to 7 were respectively measured and are shown in the following Table 2.

The viscosity at 20°C was measured by using a Model SV-10 viscometer made by AND Company, Ltd. For example, a temperature on a display was read after preparing 80 g of a sample set at a measurement temperature (20°C) and dipping a vibrator and a temperature sensor in the sample down to a predetermined or set depth (3.0cm), and waiting until the temperature (20°C) indicated on the display reached the temperatureof the sample (i.e., the temperature that was supposed to be measured) and then the measured viscosity was recorded.

The ion conductivity at 20°C was measured by using a Model CM-30R conductivity meter made by TOA-DKK Co. For example, a conductivity value on a display was read when the conductivity was stabilized depending on a temperature after preparing 80 g of a sample set at a measurement temperature and dipping a detecting element probe in the sample.

The flash point was measured by using a Model HFP382 flash point analyzer made by Walter Herzog GmbH. For example, a minimum (or substantially the minimum) temperature at which vapor of a sample was fired was measured by preparing 50 ml of a sample and then, injecting it into a test cell, setting the cell at 15 °C, increasing the temperature by 1 °C/min, and setting a fire at every 0.5 °C.

The self extinguished time (SET) was measured by pouring 0.3 g of an electrolyte in a cap of a coin cell and examining whether or not the electrolyte caught fire when the coin cell was made to contact with a flame for one second by a torch (referring to an international standard ASTM D93-11, JIS K 2265:1996). "NF" or "nonflammable" in the following Table 2 indicates that the cell did not catch fire when made to contact with a flame for greater than or equal to three times, while a number in the following Table 2 indicates a time taken (in seconds) until the fire was extinguished after the electrolyte caught fire.

**Table 2**

| | Example | | | | | | Comparative Example | | | | | | |
|---|---|---|---|---|---|---|---|---|---|---|---|---|---|
| | 1 | 2 | 3 | 4 | 5 | 6 | 1 | 2 | 3 | 4 | 5 | 6 | 7 |
| Viscosity (cP) | 4.40 | 4.35 | 4.01 | 4.38 | 3.99 | 4.42 | 3.98 | 4.01 | 3.90 | 4.48 | 4.07 | 4.00 | 3.89 |
| Ion conductivit y (mS/cm) | 6.39 | 6.42 | 6.95 | 6.35 | 6.99 | 6.40 | 6.92 | 6.95 | 6.57 | 6.46 | 6.36 | 6.98 | 7.42 |
| Flash point (°C) | 39 | 38 | 38 | 38 | 37 | 40 | 24 | 29 | 35 | 37 | 29 | 24 | 33 |
| SET (sec/0.3g) | NF | NF | NF | NF | NF | NF | 29 | 28 | 20 | NF | 28 | 29 | 26 |

Referring to Table 2, Examples 1 to 6 using an electrolyte including a sulfur-containing compound represented by Chemical Formula 1, a phosphazene compound represented by Chemical Formula 2 and a nitrile-based compound according to one embodiment showed excellent flame retardancy as compared with Comparative Examples 1 to 3 and 5 to 7.

Comparative Example 4 exhibited insufficient flame retardancy as compared with the Examples but it did exhibit much deteriorated characteristics when it was allowed to stand at a high temperature, as discussed below with respect to the following tests, and accordingly, a rechargeable lithium battery cell including the electrolyte according to one embodiment may concurrently or simultaneously secure excellent battery performance and safety.

Evaluation 2: Penetration Characteristics of Rechargeable Lithium Battery Cell Penetration characteristics of the rechargeable lithium battery cells according to Examples 1, 3 and 6 and Comparative Examples 2, 4 and 7 were evaluated according to the following method, and the results are set forth in the following Table 3.

The penetration evaluation was performed by overcharging the cells at 4.5 V and using a nail having a diameter of 2.5 mm at a penetration speed of 20 mm/s, and a voltage or temperature profile during the penetration was obtained by attaching a temperature sensor and a voltage sensor on the surface of the cell.

**Table 3**

| | Stability |
|---|---|
| Example 1 | L1 L1 L1 L1 L1 |
| Example 3 | L1 L1 L1 L1 L1 |
| Example 6 | L1 L1 L1 L1 L1 |
| Comparative Example 2 | L1 L4 L4 L1 L4 |
| Comparative Example 4 | L1 L1 L1 L1 L1 |
| Comparative Example 7 | L1 L4 L4 L4 L4 |

For a reference, Lo to L5 are as follows with a reference to standards set by Underwriters Laboratories Inc. "UL."
Lo: no leakage
L1: leakage, heat generation of less than 150 °C
L2: heat generation of less than 200 °C
L3: smoke, heat of greater than 200 °C
L4: flame
L5: explosion

Referring to Table 3, Examples 1, 3 and 6 using an electrolyte including a sulfur-containing compound represented by Chemical Formula 1, a phosphazene compound represented by Chemical Formula 2 and a nitrile-based compound according to one embodiment showed excellent penetration characteristics as compared with Comparative Examples 2 and 7. Comparative Example 4 showed substantially equivalent penetration characteristics as compared to the Examples but much deteriorated characteristics when allowed to stand at a high temperature, as discussed below with respect to the following tests, and accordingly, a rechargeable lithium battery cell including the electrolyte according to one embodiment may concurrently or simultaneously secure excellent battery performance and safety.

### Evaluation 3: Cycle-life Characteristics of Rechargeable Lithium Battery Cell

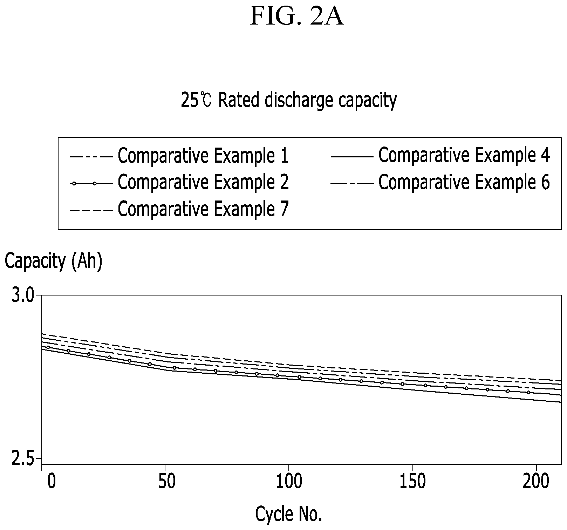

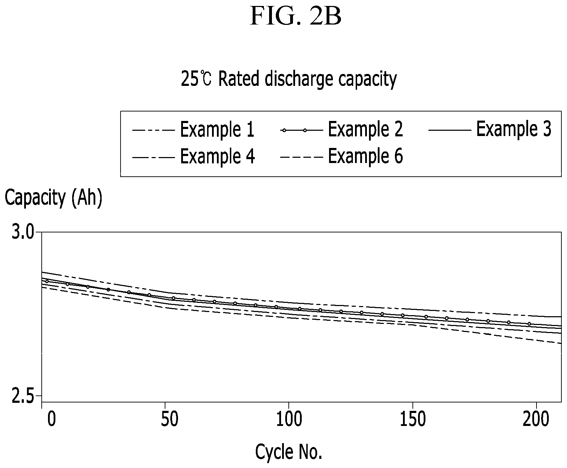

The rechargeable lithium battery cells according to Examples 1 to 4 and 6, and Comparative Examples 1, 2, 4, 6 and 7 were 500 times repetitively 1C-1C charged and discharged at 25 °C and then, 0.5C-0.2C charged and discharged at every 50^{th} cycle, and their discharge capacity was measured and the measurements are shown in FIGS. 2A and 2B.

FIG. 2A is a graph showing capacity of the rechargeable lithium battery cells according to Comparative Examples 1, 2, 4, 6 and 7 depending on a cycle number, and FIG. 2B is a graph showing capacity of the rechargeable lithium battery cells according to Examples 1 to 4 and 6 depending on a cycle number.

Referring to FIGS. 2A and 2B, Examples 1 to 4 and 6 using an electrolyte including a sulfur-containing compound represented by Chemical Formula 1, a phosphazene compound represented by Chemical Formula 2 and a nitrile-based compound according to one embodiment showed no or substantially no cycle-life characteristic difference from Comparative Examples 1, 2, 4, 6 and 7, but Comparative Examples 1, 2, 6 and 7 showed deteriorated flame retardancy or deteriorated penetration characteristics as shown in the above evaluation, while Comparative Example 4 showed deteriorated characteristics when allowed to stand at a high temperature as discussed below with respect to the following tests, and accordingly, a rechargeable lithium battery cell including the electrolyte according to one embodiment may concurrently or simultaneously secure excellent performance and safety.

### Evaluation 4: Characteristics of Rechargeable Lithium Battery Cell when Allowed to Stand at High Temperature

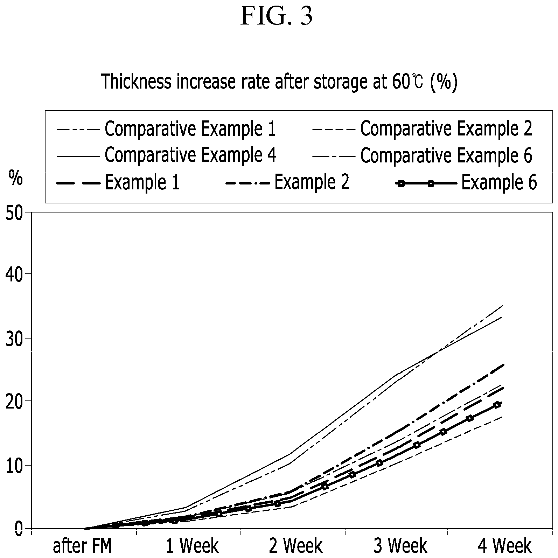

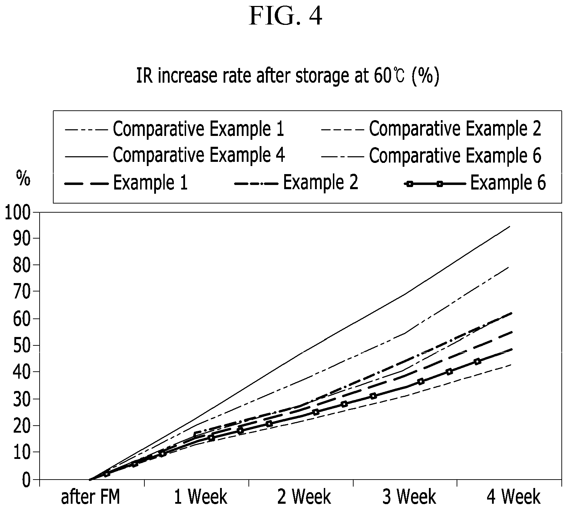

The rechargeable lithium battery cells according to Examples 1, 2 and 6 and Comparative Examples 1, 2, 4 and 6 were charged and discharged under the following conditions, and then, their thickness increase rate and internal resistance increase rate when allowed to stand at a high temperature were evaluated and are shown, respectively, in FIGS. 3 and 4.

### <Charge and Discharge Conditions>

Charging: Constant Current: 0.5C/ Constant voltage: 4.35V/ cut-off 0.05C under CC-CV
Discharging: Constant Current: 0.2C/ cut-off: 2.75V under CC

The fully charged cells were put in a 60 °C chamber and then, allowed to stand (at 60 °C) for one week and then, at 25 °C for 2 hours and 0.5C charged, and their cell thicknesses and resistance were measured, and their change amounts were calculated. These processes were repeated and evaluated for 4 weeks.

FIG. 3 is a graph showing thickness increase rates of rechargeable lithium battery cells of Examples 1, 2 and 6 and Comparative Examples 1, 2, 4 and 6 when allowed to stand at a high temperature, and FIG. 4 is a graph showing internal resistance (IR) increase rates of the rechargeable lithium battery cells of Examples 1, 2 and 6 and Comparative Examples 1, 2, 4 and 6 when allowed to stand at a high temperature. In FIGS. 3 and 4, "after FM" refers to the rechargeable lithium battery cells after formation.

Referring to FIGS. 3 and 4, Examples 1, 2 and 6 using an electrolyte including a sulfur-containing compound represented by Chemical Formula 1, a phosphazene compound represented by Chemical Formula 2 and a nitrile-based compound according to one embodiment showed a small thickness increase rate and internal resistance increase rate when allowed to stand at a high temperature and thus, exhibited excellent characteristics when allowed to stand at a high temperature as compared with Comparative Examples 1 and 4. Comparative Examples 2 and 6 showed equivalent, substantially equivalent, or smaller thickness increase rate and internal resistance increase rate when allowed to stand at a high temperature as compared to the Examples, but Comparative Example 2 showed deteriorated penetration characteristics, while Comparative Example 6 showed deteriorated flame retardancy as shown in the above evaluations, and accordingly, a rechargeable lithium battery cell including the electrolyte according to one embodiment may concurrently or simultaneously secure excellent battery performance and safety.

### Evaluation 5: Acceleration Rate Calorimeter (ARC) Analysis of Rechargeable Lithium Battery Cell

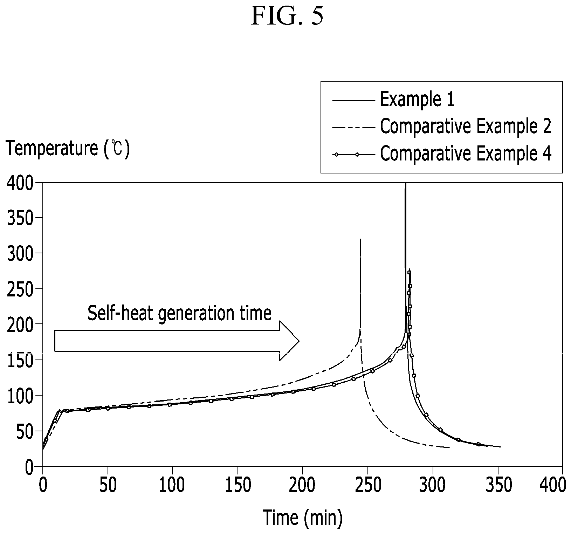

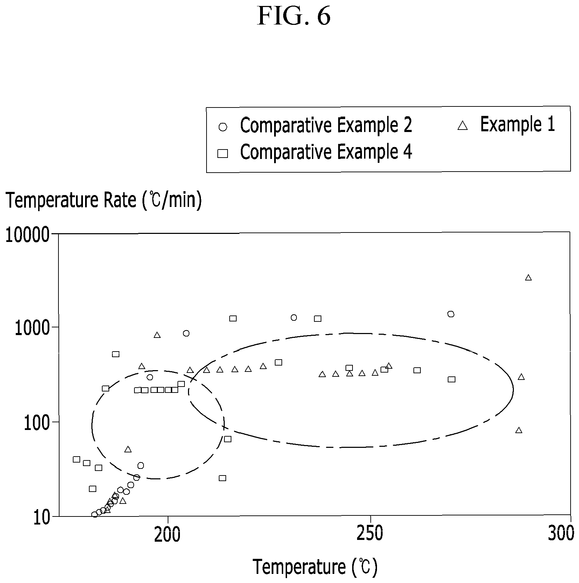

The accelerating rate calorimeter (ARC) analysis of the rechargeable lithium battery cells according to Example 1 and Comparative Examples 2 and 4 was performed according to the following method, and the results are shown in FIGS. 5 and 6.
The ARC analysis was performed by charging the rechargeable lithium battery cells at 0.5 C and 25 °C and pausing the charge for greater than or equal to 10 minutes to 72 hours, and then, their safety was evaluated by measuring a battery temperature change while the temperature was increased by 5 °C/min until it reached 350 °C.

FIGS. 5 and 6 show a temperature change of the rechargeable lithium battery cells according to Example 1 and Comparative Examples 2 and 4 depending on time and their temperature change rate depending on a temperature as their accelerating rate calorimeter (ARC) evaluation results.

Referring to FIG. 5, Example 1 and Comparative Example 4, each of which included a sulfur-containing compound and a phosphazene compound, showed delayed self extinguished time (SET) of the cells as compared with Comparative Example 2, which did not include a sulfur-containing compound and a phosphazene compound. In addition, referring to FIG. 6, the cell of Example 1, which included an electrolyte including a nitrile-based compound and a sultone-based compound, showed a higher cell explosion temperature (a temperature rate > 100) than the cell of Comparative Example 4, which did not include a nitrile-based compound and a sultone-based compound, and thus, the cell of Example 1 exhibited much improved flame retardancy.

While this disclosure has been described in connection with what are presently considered to be practical exemplary embodiments, it is to be understood that the invention is not limited to the disclosed embodiments, but, on the contrary, is intended to cover various modifications and equivalent arrangements included within the scope of the appended claims.

## Claims

1. An electrolyte for a rechargeable lithium battery, comprising:
a lithium salt, an organic solvent and an additive,
wherein the additive comprises:
a sulfur-containing compound represented by Chemical Formula 1,
a phosphazene compound represented by Chemical Formula 2, and
a nitrile-based compound: 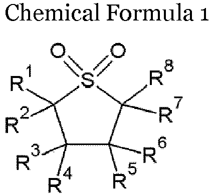 wherein,
R¹ to R⁸ are independently hydrogen, a substituted or unsubstituted C1 to C30 alkyl group, a substituted or unsubstituted C2 to C30 alkenyl group, a substituted or unsubstituted C2 to C30 alkynyl group, a substituted or unsubstituted C3 to C30 cycloalkyl group, a substituted or unsubstituted C3 to C30 cycloalkenyl group, a substituted or unsubstituted C3 to C30 cycloalkynyl group, or a substituted or unsubstituted C6 to C30 aryl group, 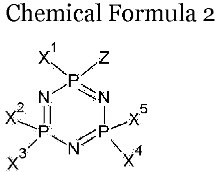
wherein,
X¹ to X⁵ are independently a halogen atom or a halogen-containing group, and
Z is -NR⁹R¹⁰ or -OR¹¹, wherein R⁹ and R¹⁰ are independently a substituted or unsubstituted C1 to C30 alkyl group, a substituted or unsubstituted C2 to C30 alkenyl group, a substituted or unsubstituted C2 to C30 alkynyl group, a substituted or unsubstituted C3 to C30 cycloalkyl group, a substituted or unsubstituted C3 to C30 cycloalkenyl group, a substituted or unsubstituted C1 to C30 haloalkyl group, a substituted or unsubstituted C6 to C30 aryl group, a substituted or unsubstituted C6 to C30 halogenated aryl group, a substituted or unsubstituted C7 to C20 arylalkyl group, a substituted or unsubstituted C1 to C20 heteroalkyl group, a substituted or unsubstituted C2 to C30 heterocycloalkyl group, a substituted or unsubstituted C2 to C30 heteroaryl group, or a substituted or unsubstituted C1 to C20 aldehyde, and R¹¹ is a substituted or unsubstituted C1 to C30 alkyl group.

2. The electrolyte for a rechargeable lithium battery of claim 1, wherein the sulfur-containing compound is included in the electrolyte in an amount of about 1 part by weight to about 20 parts by weight based on 100 parts by weight of the organic solvent.

3. The electrolyte for a rechargeable lithium battery of claim 1 or claim 2, wherein the phosphazene compound comprises at least one of the compounds represented by Chemical Formulae 3 to 5:

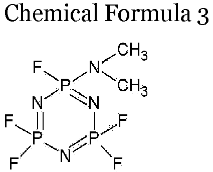

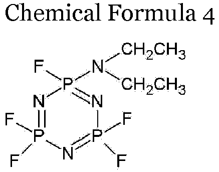

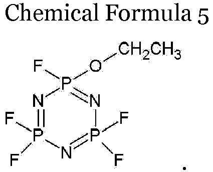

4. The electrolyte for a rechargeable lithium battery of any one of the preceding claims, wherein the phosphazene compound is included in the electrolyte in an amount of about 1 part by weight to about 20 parts by weight based on 100 parts by weight of the organic solvent.

5. The electrolyte for a rechargeable lithium battery of any one of the preceding claims, wherein the nitrile-based compound comprises a compound represented by Chemical Formula 6:
Chemical Formula 6 N≡C-L-C≡N
wherein,
L is a substituted or unsubstituted C1 to C20 alkylene group, and
the substituted C1 to C20 alkylene group comprises an alkylene wherein at least one hydrogen is substituted with a cyano group (-CN), an isocyano group (-NC), or a thiocyano group (-SCN).

6. The electrolyte for a rechargeable lithium battery of any one of claims 1 to 4, wherein the nitrile-based compound comprises a compound represented by Chemical Formula 7, a compound represented by Chemical Formula 8, or a mixture thereof.

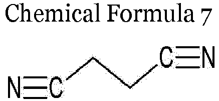

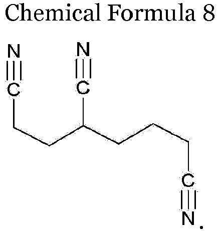

7. The electrolyte for a rechargeable lithium battery of claim 6, wherein the nitrile-based compound comprises the compound represented by Chemical Formula 7 and the compound represented by Chemical Formula 8.

8. The electrolyte for a rechargeable lithium battery of any one of the preceding claims, wherein the nitrile-based compound is included in the electrolyte in an amount of about 0.1 parts by weight to about 10 parts by weight based on 100 parts by weight of the organic solvent.

9. The electrolyte for a rechargeable lithium battery of any one of the preceding claims, wherein the additive further comprises a sultone-based compound, and
the sultone-based compound comprises a compound represented by Chemical Formula 9, a compound represented by Chemical Formula 10, or a mixture thereof: 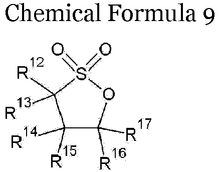 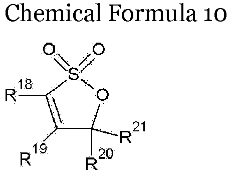 wherein,
R¹² to R²¹ are independently hydrogen, a substituted or unsubstituted C1 to C30 alkyl group, a substituted or unsubstituted C2 to C30 alkenyl group, a substituted or unsubstituted C2 to C30 alkynyl group, a substituted or unsubstituted C3 to C30 cycloalkyl group, a substituted or unsubstituted C3 to C30 cycloalkenyl group, a substituted or unsubstituted C3 to C30 cycloalkynyl group, or a substituted or unsubstituted C6 to C30 aryl group.

10. The electrolyte for a rechargeable lithium battery of claim 9, wherein the sultone-based compound comprises the compound represented by Chemical Formula 9 and the compound represented by Chemical Formula 10.

11. The electrolyte for a rechargeable lithium battery of claim 9 or claim 10, wherein the sultone-based compound is included in the electrolyte in an amount of about 0.1 parts by weight to about 10 parts by weight based on 100 parts by weight of the organic solvent.

12. The electrolyte for a rechargeable lithium battery of any one of the preceding claims, wherein the organic solvent comprises a carbonate-based compound and an ester-based compound.

13. The electrolyte for a rechargeable lithium battery of claim 12, wherein the ester-based compound comprises ethyl propionate.

14. A rechargeable lithium battery comprising an electrolyte as defined in any one of the preceding claims.

## Patentansprüche

1. Elektrolyt für eine wiederaufladbare Lithiumbatterie, umfassend:
ein Lithiumsalz, ein organisches Lösungsmittel und einen Zusatz,
wobei der Zusatz umfasst:
eine schwefelhaltige Verbindung, dargestellt durch die chemische Formel 1,
eine Phosphazenverbindung, dargestellt durch die chemische Formel 2, und
eine Verbindung auf Nitrilbasis: 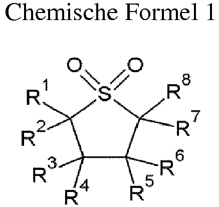 wobei
R¹ bis R⁸ unabhängig voneinander Wasserstoff, ein substituierter oder unsubstituierter C₁- bis C₃₀-Alkylrest, ein substituierter oder unsubstituierter C₂- bis C₃₀-Alkenylrest, ein substituierter oder unsubstituierter C₂- bis C₃₀-Alkinylrest, ein substituierter oder unsubstituierter C₃- bis C₃₀-Cycloalkylrest, ein substituierter oder unsubstituierter C₃- bis C₃₀-Cycloalkenylrest, ein substituierter oder unsubstituierter C₃- bis C₃₀-Cycloalkinylrest oder ein substituierter oder unsubstituierter C₆- bis C₃₀-Arylrest sind, 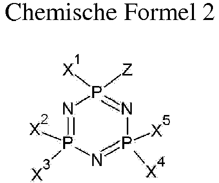 wobei
X¹ bis X⁵ unabhängig voneinander ein Halogenatom oder ein halogenhaltiger Rest sind, und
Z für -NR⁹R¹⁰ oder -OR¹¹ steht, wobei R⁹ und R¹⁰ unabhängig voneinander ein substituierter oder unsubstituierter C₁- bis C₃₀-Alkylrest, ein substituierter oder unsubstituierter C₂- bis C₃₀-Alkenylrest, ein substituierter oder unsubstituierter C₂- bis C₃₀-Alkinylrest, ein substituierter oder unsubstituierter C₃- bis C₃₀-Cycloalkylrest, ein substituierter oder unsubstituierter C₃- bis C₃₀-Cycloalkenylrest, ein substituierter oder unsubstituierter C₁- bis C₃₀-Halogenalkylrest, ein substituierter oder unsubstituierter C₆- bis C₃₀-Arylrest, ein substituierter oder unsubstituierter halogenierter C₆- bis C₃₀-Arylrest, ein substituierter oder unsubstituierter C₇- bis C₂₀-Arylalkylrest, ein substituierter oder unsubstituierter C₁- bis C₂₀-Heteroalkylrest, ein substituierter oder unsubstituierter C₂- bis C₃₀-Heterocycloalkylrest, ein substituierter oder unsubstituierter C₂- bis C₃₀-Heteroarylrest oder ein substituierter oder unsubstituierter C₁- bis C₂₀-Aldehyd sind, und R¹¹ ein substituierter oder unsubstituierter C₁- bis C₃₀-Alkylrest ist.

2. Elektrolyt für eine wiederaufladbare Lithiumbatterie nach Anspruch 1, wobei die schwefelhaltige Verbindung in dem Elektrolyten in einer Menge von etwa 1 Gewichtsteil bis etwa 20 Gewichtsteilen, bezogen auf 100 Gewichtsteile des organischen Lösungsmittels, enthalten ist.

3. Elektrolyt für eine wiederaufladbare Lithiumbatterie nach Anspruch 1 oder Anspruch 2, wobei die Phosphazenverbindung mindestens eine der durch die chemischen Formeln 3 bis 5 dargestellten Verbindungen umfasst:

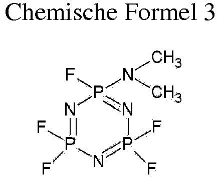

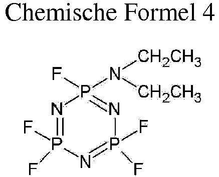

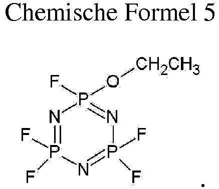

4. Elektrolyt für eine wiederaufladbare Lithiumbatterie nach einem der vorangehenden Ansprüche, wobei die Phosphazenverbindung in dem Elektrolyten in einer Menge von etwa 1 Gewichtsteil bis etwa 20 Gewichtsteilen, bezogen auf 100 Gewichtsteile des organischen Lösungsmittels, enthalten ist.

5. Elektrolyt für eine wiederaufladbare Lithiumbatterie nach einem der vorangehenden Ansprüche, wobei die Verbindung auf Nitrilbasis eine durch die chemische Formel 6 dargestellte Verbindung umfasst:
Chemische Formel 6 N≡C-L-C≡N
wobei
L ein substituierter oder unsubstituierter C₁- bis C₂₀-Alkylenrest ist, und
der substituierte C₁- bis C₂₀-Alkylenrest ein Alkylen umfasst, wobei mindestens ein Wasserstoffatom durch eine Cyanogruppe (-CN), eine Isocyanogruppe (-NC) oder eine Thiocyanogruppe (-SCN) substituiert ist.

6. Elektrolyt für eine wiederaufladbare Lithiumbatterie nach einem der Ansprüche 1 bis 4, wobei die Verbindung auf Nitrilbasis eine durch die chemische Formel 7 dargestellte Verbindung, eine durch die chemische Formel 8 dargestellte Verbindung, oder ein Gemisch davon umfasst:

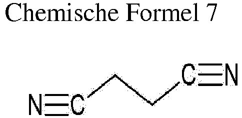

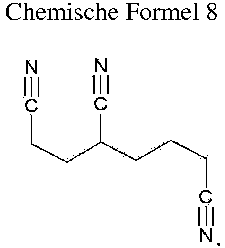

7. Elektrolyt für eine wiederaufladbare Lithiumbatterie nach Anspruch 6, wobei die Verbindung auf Nitrilbasis die durch die chemische Formel 7 dargestellte Verbindung und die durch die chemische Formel 8 dargestellte Verbindung umfasst.

8. Elektrolyt für eine wiederaufladbare Lithiumbatterie nach einem der vorangehenden Ansprüche, wobei die Verbindung auf Nitrilbasis in dem Elektrolyten in einer Menge von etwa 0,1 Gewichtsteilen bis etwa 10 Gewichtsteilen, bezogen auf 100 Gewichtsteile des organischen Lösungsmittels, enthalten ist.

9. Elektrolyt für eine wiederaufladbare Lithiumbatterie nach einem der vorangehenden Ansprüche, wobei der Zusatz weiterhin eine Verbindung auf Sultonbasis umfasst, und die Verbindung auf Sultonbasis eine durch die chemische Formel 9 dargestellte Verbindung, eine durch die chemische Formel 10 dargestellte Verbindung, oder ein Gemisch davon umfasst: 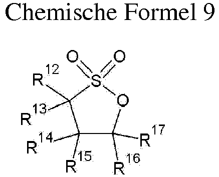 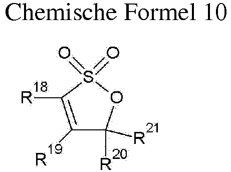 wobei
R¹² bis R²¹ unabhängig voneinander Wasserstoff, ein substituierter oder unsubstituierter C₁-bis C₃₀-Alkylrest, ein substituierter oder unsubstituierter C₂- bis C₃₀-Alkenylrest, ein substituierter oder unsubstituierter C₂- bis C₃₀-Alkinylrest, ein substituierter oder unsubstituierter C₃- bis C₃₀-Cycloalkylrest, ein substituierter oder unsubstituierter C₃- bis C₃₀-Cycloalkenylrest, ein substituierter oder unsubstituierter C₃- bis C₃₀-Cycloalkinylrest oder ein substituierter oder unsubstituierter C₆- bis C₃₀-Arylrest sind.

10. Elektrolyt für eine wiederaufladbare Lithiumbatterie nach Anspruch 9, wobei die Verbindung auf Sultonbasis die durch die chemische Formel 9 dargestellte Verbindung und die durch die chemische Formel 10 dargestellte Verbindung umfasst.

11. Elektrolyt für eine wiederaufladbare Lithiumbatterie nach Anspruch 9 oder Anspruch 10, wobei die Verbindung auf Sultonbasis in dem Elektrolyten in einer Menge von etwa 0,1 Gewichtsteilen bis etwa 10 Gewichtsteilen, bezogen auf 100 Gewichtsteile des organischen Lösungsmittels, enthalten ist.

12. Elektrolyt für eine wiederaufladbare Lithiumbatterie nach einem der vorangehenden Ansprüche, wobei das organische Lösungsmittel eine Verbindung auf Carbonatbasis und eine Verbindung auf Esterbasis umfasst.

13. Elektrolyt für eine wiederaufladbare Lithiumbatterie nach Anspruch 12, wobei die Verbindung auf Esterbasis Propionsäureethylester umfasst.

14. Wiederaufladbare Lithiumbatterie, umfassend einen Elektrolyten wie definiert in einem der vorangehenden Ansprüche.

## Revendications

1. Electrolyte pour batterie au lithium rechargeable, comprenant :
un sel de lithium, un solvant organique et un additif,
dans lequel l'additif comprend :
un composé soufré représenté par la Formule chimique 1,
un composé de phosphazène représenté par la Formule chimique 2, et
un composé à base de nitrile : 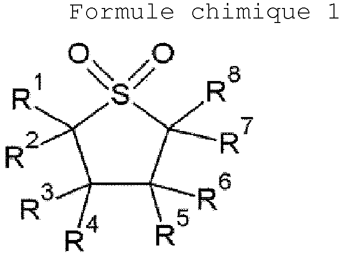 dans laquelle,
R¹ à R⁸ sont indépendamment un atome d'hydrogène, un groupe alkyle en C1 à C30 substitué ou non substitué, un groupe alcényle en C2 à C30 substitué ou non substitué, un groupe alcynyle en C2 à C30 substitué ou non substitué, un groupe cycloalkyle en C3 à C30 substitué ou non substitué, un groupe cycloalcényle en C3 à C30 substitué ou non substitué, un groupe cycloalcynyle en C3 à C30 substitué ou non substitué, ou un groupe aryle en C6 à C30 substitué ou non substitué, 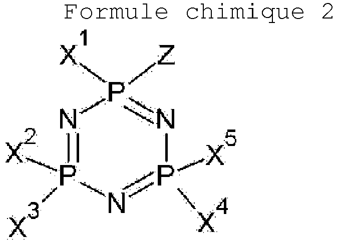
dans laquelle,
X¹ à X⁵ sont indépendamment un atome d'halogène ou un groupe halogéné, et
Z est -NR⁹R¹⁰ ou -OR¹¹, où R⁹ et R¹⁰ sont indépendamment un groupe alkyle en C1 à C30 substitué ou non substitué, un groupe alcényle en C2 à C30 substitué ou non substitué, un groupe alcynyle en C2 à C30 substitué ou non substitué, un groupe cycloalkyle en C3 à C30 substitué ou non substitué, un groupe cycloalcényle en C3 à C30 substitué ou non substitué, un groupe halogénoalkyle en C1 à C30 substitué ou non substitué, un groupe aryle en C6 à C30 substitué ou non substitué, un groupe halogénoaryle en C6 à C30 substitué ou non substitué, un groupe arylalkyle en C7 à C20 substitué ou non substitué, un groupe hétéroalkyle en C1 à C20 substitué ou non substitué, un groupe hétéro-cycloalkyle en C2 à C30 substitué ou non substitué, un groupe hétéroaryle en C2 à C30 substitué ou non substitué, ou un aldéhyde en C1 à C20 substitué ou non substitué, et R¹¹ est un groupe alkyle en C1 à C30 substitué ou non substitué.

2. Electrolyte pour batterie au lithium rechargeable selon la revendication 1, dans lequel le composé soufré est contenu dans l'électrolyte en une quantité d'environ 1 partie à environ 20 parties en poids pour 100 parties en poids de solvant organique.

3. Electrolyte pour batterie au lithium rechargeable selon la revendication 1 ou la revendication 2, dans lequel le composé de phosphazène comprend au moins un des composés représentés par les Formules chimiques 3 à 5 :

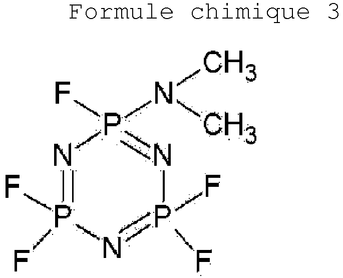

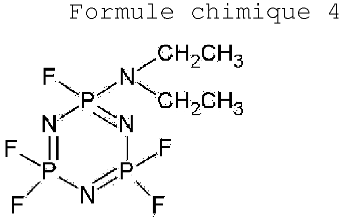

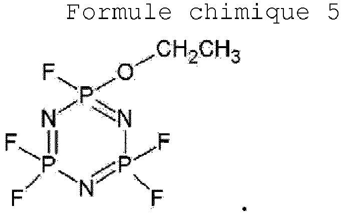

4. Electrolyte pour batterie au lithium rechargeable selon l'une quelconque des revendications précédentes, dans lequel le composé de phosphazène est contenu dans l'électrolyte en une quantité d'environ 1 partie à environ 20 parties en poids pour 100 parties en poids de solvant organique.

5. Electrolyte pour batterie au lithium rechargeable selon l'une quelconque des revendications précédentes, dans lequel le composé à base de nitrile comprend un composé représenté par la Formule chimique 6 :
Formule chimique 6 N≡C-L-C≡N
dans laquelle,
L est un groupe alkylène en C1 à C20 substitué ou non substitué, et
le groupe alkylène en C1 à C20 substitué consiste en un alkylène dans lequel au moins un atome d'hydrogène est substitué par un groupe cyano (-CN), un groupe isocyano (-NC), ou un groupe thiocyano (-SCN).

6. Electrolyte pour batterie au lithium rechargeable selon l'une quelconque des revendications 1 à 4, dans lequel le composé à base de nitrile comprend un composé représenté par la Formule chimique 7, un composé représenté par la Formule chimique 8, ou un mélange de ceux-ci :

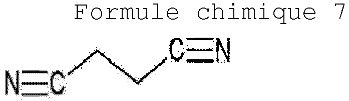

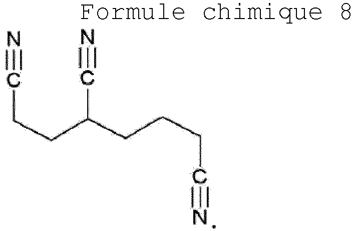

7. Electrolyte pour batterie au lithium rechargeable selon la revendication 6, dans lequel le composé à base de nitrile comprend le composé représenté par la Formule chimique 7 et le composé représenté par la Formule chimique 8.

8. Electrolyte pour batterie au lithium rechargeable selon l'une quelconque des revendications précédentes, dans lequel le composé à base de nitrile est contenu dans l'électrolyte en une quantité d'environ 0,1 partie à environ 10 parties en poids pour 100 parties en poids de solvant organique.

9. Electrolyte pour batterie au lithium rechargeable selon l'une quelconque des revendications précédentes, dans lequel l'additif comprend en outre un composé à base de sultone, et le composé à base de sultone comprend un composé représenté par la Formule chimique 9, un composé représenté par la Formule chimique 10, ou un mélange de ceux-ci : 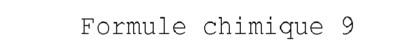 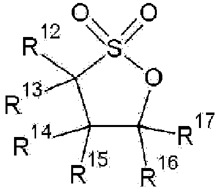 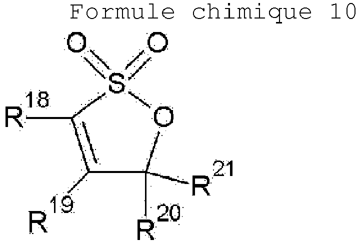 dans lesquelles,
R¹² à R²¹ sont indépendamment un atome d'hydrogène, un groupe alkyle en C1 à C30 substitué ou non substitué, un groupe alcényle en C2 à C30 substitué ou non substitué, un groupe alcynyle en C2 à C30 substitué ou non substitué, un groupe cycloalkyle en C3 à C30 substitué ou non substitué, un groupe cycloalcényle en C3 à C30 substitué ou non substitué, un groupe cycloalcynyle en C3 à C30 substitué ou non substitué, ou un groupe aryle en C6 à C30 substitué ou non substitué.

10. Electrolyte pour batterie au lithium rechargeable selon la revendication 9, dans lequel le composé à base de sultone comprend le composé représenté par la Formule chimique 9 et le composé représenté par la Formule chimique 10.

11. Electrolyte pour batterie au lithium rechargeable selon la revendication 9 ou la revendication 10, dans lequel le composé à base de sultone est contenu dans l'électrolyte en une quantité d'environ 0,1 partie à environ 10 parties en poids pour 100 parties en poids de solvant organique.

12. Electrolyte pour batterie au lithium rechargeable selon l'une quelconque des revendications précédentes, dans lequel le solvant organique comprend un composé à base de carbonate et un composé à base d'ester.

13. Electrolyte pour batterie au lithium rechargeable selon la revendication 12, dans lequel le composé à base d'ester comprend le propionate d'éthyle.

14. Batterie au lithium rechargeable comprenant un électrolyte selon l'une quelconque des revendications précédentes.
